(19) Europäisches Patentamt
European Patent Office
Office européen des brevets

(11) Publication number : 0 184 894 B2

# (12) NEW EUROPEAN PATENT SPECIFICATION

(45) Date of publication of the new patent specification : 31.03.93 Bulletin 93/13

(21) Application number : 85306894.8

(22) Date of filing : 27.09.85

(51) Int. Cl.$^5$ : C02F 5/10, C02F 5/12, C23F 11/173, C08F 220/06, C08F 222/02

## (54) Carboxylic-sulfonic-polyalkylene oxide polymers and their use as scale and corrosion inhibitors.

(30) Priority : 09.11.84 US 669903

(43) Date of publication of application : 18.06.86 Bulletin 86/25

(45) Publication of the grant of the patent : 23.11.88 Bulletin 88/47

(45) Mention of the opposition decision : 31.03.93 Bulletin 93/13

(84) Designated Contracting States : AT BE CH DE FR GB IT LI LU NL SE

(56) References cited :
EP-A- 0 003 235
EP-A- 0 123 108
EP-A- 0 133 210
DE-A- 2 123 732
FR-A- 2 497 514
US-A- 3 898 037
Hochmolekular Bericht 16822/1983 -abstract of JA 57012895
Chemikal Abstracts 96: 187068a

(73) Proprietor : CALGON CORPORATION
Route 60-Campbell's Run Road
Robinson Township Pennsylvania 15205 (US)

(72) Inventor : Cha, Charles Y.
123 Druid Drive
McMurray Pennsylvania 15317 (US)
Inventor : Varsanik, Richard G.
101 Great Oaks Drive
Coraopolis Pennsylvania 15108 (US)
Inventor : Chen, Shih-Ruey T.
114 Firth Drive
Coraopolis Pennsylvania 15108 (US)

(74) Representative : Crampton, Keith John Allen et al
D. YOUNG & CO. 10 Staple Inn
London WC1V 7RD (GB)

EP 0 184 894 B2

## Description

Most industrial waters contain alkaline-earth metal cations, such as those of calcium, barium and magnesium, and several anions such as bicarbonate, carbonate, sulfate, oxalate, phosphate, silicate and fluoride. When combinations of these anions and cations are present in concentrations that cause the solubility products of the corresponding salts to be exceeded, precipitates form until these concentrations are no longer exceeded. For example, when the concentrations of calcium ion and carbonate ion are such that the solubility product of calcium carbonate is exceeded, a solid phase of calcium carbonate will form.

Solubility product concentrations are exceeded for various reasons, such as partial evaporation of the water phase, change in pH, pressure or temperature, and the introduction of additional ions that form insoluble compounds with the ions already present in the solution.

As these reaction products are precipitated on surfaces of the water-carrying system, they accumulate as scale or deposits. This accumulation prevents effective heat transfer, interferes with fluid flow, facilitates corrosive processes, and harbours bacteria. Scale is an expensive problem in many industrial water systems causing delays and shutdowns for cleaning and removal.

The precipitation of scale-forming compounds can be prevented by inactivating their cations with chelating or sequestering agents, so that the solubility product is not exceeded. Generally, this requires large quantities of chelating or sequestering agent as cation, since chelation is a stoichiometric reaction, and these amounts are not always desirable or economical.

Almost 50 years ago, it was discovered that certain inorganic polyphosphates would prevent such precipitation when added in amounts for less than the concentrations needed for sequestering or chelating. The term "polyphosphates" means phosphates having a molar ratio of metal oxide: $P_2O_5$ in the range from 1:1 to 2:1.

When a precipitation inhibitor is present in a potentially scale-forming system at a markedly lower concentration than that required for stoichiometric binding of the scale-forming cation, it is said to be present in "threshold" amounts. See for example, Hatch and Rice, "Industrial Engineering Chemistry", Vol. 31, pages 51 to 53 (Jan. 1939); Reitemeier and Buehrer, "Journal of Physical Chemistry", Vol. 44, No. 5, pages 535 to 536 (May 1940); and U.S. Patent Specifications US-A-2,358,222 and 2,539,305.

Usually, sequestering takes place at a weight ratio of threshold active compound to scale-forming cation components of greater than 10:1, depending on the anion components in the water. Threshold inhibition generally takes place at a weight ratio of threshold active compound to scale-forming cation components of less than 0.5:1.0.

Certain water-soluble polymers, including groups derived from acrylamide and acrylic acid, have been used to condition water containing scale-forming compounds. As for example, see U.S. Patent Specifications US-A-2,783,200; 3,514,476; 2,980,610; 3,285,886; 3,463,730 and 3,518,204.

U.S. Patent Specification US-A-3,928,196 discloses the use of a copolymer of 2-acrylamido-2-methylpropylsulfonic acid and acrylic acid in inhibiting scale.

Japanese Patent Specifications 58-149911 and 58-147413 disclose the use carboxylic/polyalkylene oxide copolymers as pigment dispersants. Pendant alkylene oxide chains may be capped with sulfonic acid groups.

Japanese Patent 57-84794 discloses the use of copolymers of acrylic acid and allyl polyethylene glycol as scale inhibitors.

U.S. Patent Specification US-A-3,898,037 discloses polymers and copolymers of acrylamidosulfonic acid compounds and their use basically as dispersants for particles cantained in aqueous systems. As example of the sulfonic acid compound is 2-acrylamido-2-methylpropane sulfonic acid; examples of co-monomers include acrylic acid, acrylamide, and their derivatives. The polymers and copolymers are specifically useful in dispersing water-insoluble compounds of iron, calcium, magnesium and aluminum and such commonly occurring particles of silt and clay.

European Patent Specification EP-A-0 123 108 discloses copolymers having a molecular weight from 400 to 20,000 of maleic acid and an adduct of an oxyalkylene and allyl alcohol in molar ratio from 5:100 to 50:50. The copolymers are useful as scale-preventing agents.

European Patent Specification EP-A-0 003 235 discloses inter alia a terpolymer made out of

84 parts methacrylic acid
58 parts acrylamidopropane sulphonic acid, and
278 parts of an ester,

and having a viscosity of 3,400 mPa. The ester component comprises a copolymer of an unsaturated polyoxyethylene compound of the formula

$$C_{16}H_{33}\text{-}O\text{-}(CH_2\text{-}CH_2)_{80}\text{-}CO\text{-}CH{=}CH_2$$

with methacrylic acid and isopropanol.

The present invention provides a method of inhibiting corrosion and the formation and deposition of scale

and iron oxide in aqueous systems, that comprises adding to the system at least 0.1 ppm of a water-soluble polymer having an intrinsic viscosity, measured in 1.0 *M* sodium chloride on a 75 Cannon Ubbelohde capillary viscometer, of 0.05 to 2.5 dl/g, prepared from:

(a) 35 to 90% by weight of an unsaturated carboxylic acid or its salt; and
(b) 5 to 40% by weight of a 2-(meth)acrylamido-2-methylpropyl sulfonic acid or its salt; and
(c) 5 to 40% by weight of an unsaturated polyalkylene oxide compound.

The invention also provides a water soluble polymer having an intrinsic viscosity, measured in 1.0 *M* sodium chloride on a 75 Cannon Ubbelohde capillary viscometer, of 0.05 to 2.5 dl/g prepared from:

(a) 35 to 90% by weight of an unsaturated carboxylic compound that is acrylic acid, methacrylic acid, maleic acid, itaconic acid, a salt of such an acid or a mixture of two or more such compounds;
(b) 5 to 40% by weight of an unsaturated sulfonic compound that is 2-acrylamido-2-methylpropylsulfonic acid, 2-methacrylamido-2-methylpropylsulfonic acid, a salt of such an acid or a mixture of two or more such compounds; and
(c) 5 to 40% by weight of an unsaturated polyalkylene oxide compound having the formula

$$CH_2{=}CH(OCH_2CH_2)_nOH \text{ or } CH_2{=}CH(OCH_2CH_2)_nOCH_3,$$

where n is an integer of from 5 to 10.

The percentage of solids in the reaction mixture, though not critical, is preferably in the range 1 to 50% by weight solids.

In the method and compositions of the present invention, the amounts are preferably 50-70% by weight of the unsaturated carboxylic acid or salt; 10 to 40% by weight of the unsaturated sulfonic acid or salt; and 10 to 30% by weight of the unsaturated polyalkylene oxide compound. The preferred intrinsic velocity is 0.05 to 0.5 dl/g.

The phrase "inhibiting the formation and deposition" includes threshold inhibition, colloid stabilization, dispersion, solubilization, and particle size reduction.

The word "scale" includes any scale that forms in an aqueous solution. Examples include calcium carbonate, calcium sulfate, calcium phosphate, calcium phosphonate (including calcium hydroxyethylidene diphosphonic acid), calcium oxalate, barium sulfate, silica, alluvial deposits, metal oxides (including iron oxide), and metal hydroxides, (including magnesium hydroxide and zinc hydroxide).

The phrase "aqueous system" includes any system containing water, e.g. heat rejection (cooling) systems, boilers, evaporators, desalination plants, gas scrubbers, sewage sludge thermal conditioning equipment, reverse osmosis equipment, sugar evaporators, paper processing plants and mining circuits.

Any unsaturated carboxylic acid or salt may be used to prepare the polymer. Examples include acrylic acid, methacrylic acid, α-haloacrylic acid, maleic acid, itaconic acid, vinylacetic acid, allylacetic acid, fumaric acid, β-carboxyethyl acrylate, their salts, and mixtures of such compounds. The preferred carboxylic acids are acrylic acid, methacrylic acid, β-carboxyethylacrylate, maleic acid, fumaric acid, itaconic acid, mono and diesters of maleic and/or fumaric and/or itaconic acid, and their salts. Especially preferred are acrylic acid, methacrylic acid and their salts.

Any unsaturated polyalkylene oxide compound may be used. Examples include allyl polyethylene glycol, methallyl polyethylene glycol, polyethylene glycol acrylate, polyethylene glycol methacrylate, methoxy allyl polyethylene oxide, the corresponding polypropylene compounds, and the ether derivatives of all such compounds. Also, mixtures of polyethers formed from polyethylene oxide with other polyalkylene oxides, such as propylene or butylene oxide, may be used. The polyether chain may be capped, with an alkyl, aralkyl, sulfonate or phosphonate group, or a metal ion, or uncapped.

Mixtures of the various monomers may be used. Non-ionic monomers (such as acrylamide, methacrylamide and acrylonitrile) may also be present in the polymers. Terpolymers are preferred.

The polymers may be prepared by mixing the monomers preferably in the presence of a free-radical initiator. Any free-radical initiator may be used. Examples include peroxides, azo initiators and redox systems. The polymerization may also be initiated photochemically. The preferred catalysts are sodium persulfate and sodium metabisulfite.

The polymerization may be conducted by any of a variety of procedures, for example, in solution, suspension, bulk and emulsion.

The reaction temperature is not critical. The reaction will generally occur between 10 and 100°C. The reaction, depending on the temperature, generally takes from 5 minutes to 12 hours. Measuring for residual monomer will verify when the reaction is complete.

The pH of the reaction mixture is not critical. The pH is generally in the range 3.0 to 9.0.

The polymers of the invention are used in a minimum dosage of 0.1 ppm, preferably 0.1 to 100 ppm, particularly 0.1 to 25 ppm.

Polymers of the invention have surprisingly been found effective as scale inhibitors alone and in the presence of hydroxyethylidene diphosphonic acid and other scale control agents. They may be used in conjunction with other corrosion inhibitors such as $PO_4^{-3}$.

The following Examples illustrate the present invention and compare it with prior art. All parts and percentages are by weight unless otherwise stated.

## Examples

The following abbreviations are used in the examples and are defined as indicated:

AA is acrylic acid,

AMPS is 2-acrylamido-2-methylpropylsulfonic acid, and

Allyl PEG is $CH_2$=$CH_2$-$CH_2(OCH_2CH_2)_nOH$ and

Methoxy Allyl PEG is $CH_2$=CH-$CH_2$-$(OCH_2CH_2)_nOCH_3$, where n is 5 to 10, particularly 7 in Allyl PEG.

In the Examples, numbers 1, 2, 5 and 6 are given for comparative purposes; only Examples 3, 4 and 7 are in accordance with the invention.

## Polymerization

### Synthesis of allyl ether of methoxy polyethylene glycol

Methoxy PEG (Carbowax® 350) was reacted with an excess of allyl bromide (added slowly) in the presence of sodium hydroxide. The unreacted allyl bromide and water were then distilled off at a reduced pressure. NaBr was precipitated and filtered off. The monomer solution was diluted with methanol, then neutralized with concentrated HCl. Methanol and water were removed by rotary evaporation at 70°C. A clear light-brown solution was obtained after filtration. The resultant allyl ether structure of the product was confirmed by IR and NMR. An equimolar concentration of methoxy group and alkyl group was observed.

### Synthesis of polymers

Methoxy allyl PEG and water were added in the reactor as a heel and heated to 80°C. A 38% sodium acrylate solution and an ammonium persulfate (APS) solution and a sodium metabisulfite solution were fed in over 2 hours. The final polymer solution had 30% solids. For the preparation of AA/AMPS/Methoxy Allyl PEG terpolymer, the only modification was to add NaAMPS solution into the monomer mix and feed it in.

Intrinsic viscosities were measured in 1 *M* NaCl in a size 75 Cannon Ubbelohde capillary viscometer. Measurements at 2.0, 1.0, and 0.5 g/dl were taken. The Huggins equation was used to determine the intrinsic viscosity.

| | Composition (Wt. %) | | | | |
|---|---|---|---|---|---|
| Examples | AA | AMPS | Methoxy allyl PEG | Initiator | Amount of initiator |
| 1 | 58 | 0 | 42 | APS | 2.5% |
| 2 | 60 | 0 | 40 | APS/SMBS | 2.7%/4.0% |
| 3 | 60 | 10 | 30 | APS/SMBS | 2.4%/3.6% |
| 4 | 60 | 20 | 20 | APS/SMBS | 2.0%/2.0% |

APS: Ammonium Persulfate
SMBS: Sodium Metabisulfite

## Calcium carbonate inhibition

Calcium carbonate stabilization was determined by adding a given concentration of the polymers of the invention to a solution containing 200 mg/l $Ca^{+2}$ (as $CaCl_2$), 600 mg/l $HCO_3^{-1}$ (as $NaHCO_3$) at pH 8.0±0.1. The solution was stored in a stagnant flask for 24 hours at 60°C (140°F). Poor performing samples allow a precipitate of $CaCO_3$ to form. To remove these 'solids' the solution is filtered through a 2.5 μm filter. The inhibitor effectiveness under these conditions is obtained by determination of the soluble calcium content of the test solutions using the Schwarzenbach titration method (EDTA, chrome black T indicator). The soluble calcium

ion concentration in the absence of inhibitor is equivalent to 0% scale inhibition. The percent inhibition for a given test is determined by:

$$\frac{Ve - Vo}{Vt - Vo} \times 100 = \%\ \text{inhibition}$$

Vo=the Schwarzenbach titration volume with no inhibitor present (control)
Vt=the Schwarzenbach titration volume when no precipitation occurs
Ve=the experimental Schwarzenbach titration volume when inhibitors are present in the test solution

Calcium phosphate inhibition

Calcium phosphate stabilization was determined by adding a given concentration of the polymer of the invention to a solution containing 200 mg/l $Ca^{+2}$ (as $CaCl_2$) and 9 mg/l $PO_4^{-3}$ (as $Na_2HPO_4$). The solution is buffered at pH 8.5 by adding a 16:1 solution of $NaHCO_3$:$Na_2CO_2$. This solution was stored for 24 hours at 60°C (140°F). Poor performing samples allow $CaPO_4$ precipitation to occur so the stored solutions are filtered through 2.5 μm filter paper to remove 'solids'. The inhibitor effectiveness under these conditions is obtained by determination of the soluble phosphate content of the test solution using a photometric method (ascorbic acid as indicator). The range of the test is about 0 to 1.6 mg/l phosphate when the color is measured in a 1-inch cell at a wavelength of 880 nm. Higher levels can be determined by: 1) diluting the sample; 2) measuring the test color in a smaller tube or cell; and/or 3) making the color measurement at 625 nm. The percent inhibition for a given test is determined by:

$$\frac{(\text{mg/l } PO_4 \text{ in inhibitor treated flask}) - (\text{mg/l } PO_4 \text{ in control flask})}{(\text{mg/l } PO_4 \text{ theoretical}(9\text{ mg/l}) - (\text{mg/l } PO_4 \text{ in control flask})} \times 100 = \%\ \text{inhibition}$$

TABLE I

| Examples | Composition (Wt. %) | | | Initiator | Amount of initiator | [η] (dl/g) | $CaCO_3$* | | | $CaPO_4$** | | |
|---|---|---|---|---|---|---|---|---|---|---|---|---|
| | AA | AMPS | Methoxy allyl PEG | | | | 1 ppm | 2 ppm | 4 ppm | 8 ppm | 10 ppm | 12 ppm |
| 1 | 58 | 0 | 42 | APS | 2.5% | 0.85 | — | — | — | 3 | 9 | 23 |
| 2 | 60 | 0 | 40 | APS/SMBS | 2.7%/4.0% | 0.2 | 95 | 100 | 100 | — | — | 35 |
| 3 | 60 | 10 | 30 | APS/SMBS | 2.4%/3.6% | 0.1 | 77 | 88 | 100 | 19 | 89 | 96 |
| 4 | 60 | 20 | 20 | APS/SMBS | 2.0%/2.0% | 0.09 | 50 | 90 | 100 | 94 | 100 | — |

* $CaCO_3$ Test: 200 mg/l $Ca^{++}$, pH=8.0, 60°C, 24 Hours.
** $Ca/PO_4$ Test: 200 mg/l $Ca^{++}$, 9 mg/l $PO_4^{-3}$, pH=8.5, 60°C, 24 Hours.
APS: Ammonium Persulfate
SMBS: Sodium Metabisulfite

The tendency of the polymer to prevent coagulation and precipitation of iron oxide in the presence of calcium ion was tested. The results are summarized in Table II.

TABLE II
Iron oxide dispersion in $Ca^{+2}$
(pH 8.2, 5 mg/l iron oxide, 5 mg/l polymer)

| Example | Polymer | Max. $Ca^{+2}$ level before coagulation |
|---|---|---|
| 5 | AA/Methoxy Allyl PEG 60/40 | 5 mmoles |
| 6 | AA/AMPS 60/40 | 100 mmoles |
| 7 | AA/AMPS/Methoxy Allyl PEG 60/20/20 | 400 mmoles |

Preparation of amorphous iron oxide

Fresh X-ray amorphous iron oxide was prepared by the addition of NaOH to $FeCl_3$ solution at an OH:Fe ratio of 4:1 and left overnight (19 hours) at 40°C. The resulting iron oxide particles was reported to be approximately 6 nm. The amorphous iron oxide thus formed is diluted with a testing solution to give desired level of iron oxide usually 5 mg/l.

Dispersion testing

100 cc of cooling water standard (CWS) or given $Ca^{++}$ ion concentrations containing 5 mg/l iron oxide was used for testing colloids and 5 mg/l polymer (on a solid basis) was added. The pH of these solutions was 8.0-9.0. The solutions were kept in 70°C Water bath for 24 hours. An aliquot portion of supernatant was taken at 24 or 72 hours and % transmission at 415 nm was measured.

## Claims

**1.** A method of inhibiting corrosion and the formation and deposition of scale and iron oxide in aqueous systems, comprises adding to the system at least 0.1 ppm of a water-soluble polymer having an intrinsic viscosity, measured in 1.0 *M* sodium chloride on a 75 Cannon Ubbelohde capillary viscometer, of 0.05 to 2.5 dl/g, characterised in that the polymer has been prepared from:
(a) 35 to 90% by weight of an unsaturated carboxylic acid or its salt; and
(b) 5 to 40% by weight of 2-acrylamido-2-methylpropylsulfonic acid or 2-methacrylamido-2-methylpropylsulfonic acid or a salt of such a compound; and
(c) 5 to 40% by weight of an unsaturated polyalkylene oxide compound.

**2.** A method as claimed in Claim 1, in which the polymer has been prepared from:
(a) 50 to 70% by weight of the unsaturated carboxylic acid or its salt;
(b) 10 to 40% by weight of the 2-(meth)acrylamido-2-methylpropyl sulfonic acid or its salt; and
(c) 10 to 30% by weight of the unsaturated polyalkylene oxide compound.

**3.** A method as claimed in Claim 1 or 2, in which the said intrinsic viscosity is 0.05 to 0.5 dl/g.

**4.** A method as claimed in any preceding claim, in which from 0.1 to 100 ppm of polymer is added.

**5.** A method as claimed in Claim 1, in which
(a) the carboxylic compound is acrylic acid, methacrylic acid, α-halo acrylic acid, itaconic acid, vinyl acetic acid, alkyl acetic acid, β-carboxyethyl acrylate, fumaric acid, or maleic acid, or a salt of such an acid; and
(b) the polyalkylene oxide compound is allyl polyalkyl glycol, methallyl polyalkyl glycol, polyalkylene glycol acrylate, polyalkylene glycol methacrylate or methoxy allyl polyalkylene oxide or an ether derivative of such a compound.

6. A method as claimed in Claim 5, in which the carboxylic compound is acrylic acid or methacrylic acid or one of their salts and the polyethylene oxide compound is allyl polyethylene glycol or methallyl polyethylene glycol.

7. A water-soluble polymer having an intrinsic viscosity, measured in 1.0 *M* sodium chloride on a 75 Cannon Ubbelohde capillary viscometer of 0.05 to 2.5 dl/g characterised in that it has been prepared from:
(a) 35 to 90% by weight of an unsaturated Carboxylic compound that is acrylic acid, Methacrylic acid, maleic acid, itaconic acid, a salt of such an acid or a mixture of two or more such compounds;
(b) 5 to 40% by weight of an unsaturated sulfonic compound that is 2-acrylamido-2-methylpropylsulfonic acid, 2-methacrylamido-2-methylpropylsulfonic acid, a salt of such an acid or a mixture of two or more such compounds; and
(c) 5 to 40% by weight of an unsaturated polyalkylene oxide compound having the formula

$$CH_2=CH(OCH_2CH_2)_nOH \text{ or } CH_2=CH(OCH_2CH_2)_nOCH_3,$$

where n is an integer of from 5 to 10.

8. A polymer as claimed in Claim 7, in which the unsaturated carboxylic compound is as defined in Claim 6 and the unsaturated sulfonic compound is as defined in Claim 1.

9. A polymer as claimed in Claim 7, prepared from 50 to 70% by weight of acrylic acid or its salt; 10 to 40% by weight of 2-acrylamido-2-methyl propyl sulfonic acid and 10 to 30% by weight of an allyl methoxy polyethylene glycol containing 5 to 10 ethyleneoxy residues in the molecule.

10. A polymer as claimed in any one of Claims 7 to 9 in which the said intrinsic viscosity is 0.05 to 0.5 dl/g.

## Patentansprüche

1. Ein Verfahren zur Hemmung von Korrosion und der Bildung und Ablagerung von Kesselstein und Eisenoxid in wässerigen Systemen, umfassend das Zusetzen von wenigstens 0,1 TpM eines wasserlöslichen Polymers mit einer grundmolaren Viskositätszahl, gemessen in 1,0M Natriumchlorid mit einem 75 Cannon Ubbelohde-Kapillarviskosimeter, von 0,05 bis 2,5 dl/g zu dem System, dadurch gekennzeichnet, daß das Polymer aus:
(a) 35 bis 90 Gew.-% einer ungesättigten Carbonsäure oder eines Salzes davon; und
(b) 5 bis 40 Gew.-% von 2-Acrylamido-2-methylpropylsulfonsäure, 2-Methacrylamido-2-methylpropylsulfonsäure oder einem Salz einer solchen Säure; und
(c) 5 bis 40 Gew.-% einer ungesättigten Polyalkylenoxidverbindung hergestellt worden ist.

2. Ein Verfahren wie in Anspruch 1 beansprucht, wobei das Polymer aus:
(a) 50 bis 70 Gew.-% der ungesättigten Carbonsäure oder eines Salzes davon;
(b) 10 bis 40 Gew.-% 2-Methacrylamido-2-methylpropylsulfonsäure oder einem Salz davon; und
(c) 10 bis 30 Gew.-% der ungesättigten Polyalkylenoxidverbindung hergestellt worden ist.

3. Ein Verfahren wie in Anspruch 1 oder 2 beansprucht, wobei die genannte grundmolare Viskositätszahl 0,05 bis 0,5 dl/g ist.

4. Ein Verfahren wie in einem der vorhergehenden Ansprüche beansprucht, wobei 0,1 bis 100 TpM des Polymers zugesetzt werden.

5. Ein Verfahren wie in Anspruch 1 beansprucht, wobei
(a) die Carbonsäureverbindung Acrylsäure, Methacrylsäure, α-Halogenacrylsäure, Itaconsäure, Vinylessigsäure, Alkylessigsäure, β-Carboxyethylacrylat, Fumarsäure oder Maleinsäure, oder ein Salz einer solchen Säure ist; und
(b) die Polyalkylenoxidverbindung Allylpolyalkylglykol, Methallylpolyalkylglykol, Polyalkylenglykolacrylat, Polyalkylenglykolmethacrylat oder Methoxyallylpolyalkylenoxid, oder ein Etherderivat einer solchen Verbindung ist.

6. Ein Verfahren wie in Anspruch 5 beansprucht, wobei die Carbonsäureverbindung Acrylsäure oder Methacrylsäure, oder eines ihrer Salze ist und die Polyethylenoxidverbindung Allylpolyethylenglykol oder Methallylpolyethylenglykol ist.

7. Ein wasserlösliches Polymer mit einer grundmolaren Viskositätszahl, gemessen in 1,0M Natriumchlorid mit einem 75 Cannon Ubbelohde-Kapillarviskosimeter, von 0,05 bis 2,5 dl/g, dadurch gekennzeichnet, daß es aus:
   (a) 35 bis 90 Gew.-% einer ungesättigten Carbonsäureverbindung, nämlich Acrylsäure, Methacrylsäure, Maleinsäure, Itaconsäure, einem Salz einer solchen Säure oder einem Gemisch aus zweien oder mehreren solcher Verbindungen;
   (b) 5 bis 40 Gew.-% einer ungesättigten Sulfonsäureverbindung, nämlich 2-Acrylamido-2-methylpropylsulfonsäure, 2-Methacrylamido-2-methylpropylsulfonsäure, einem Salz einer solchen Säure oder einem Gemisch aus zweien oder mehreren solcher Verbindungen; und
   (c) 5 bis 40 Gew.-% einer ungesättigten Polyalkylenoxidverbindung mit der Formel $CH_2=CH(OCH_2CH_2)_nOH$ oder $CH_2=CH(OCH_2CH_2)_nOCH_3$, worin n eine ganze Zahl von 5 bis 10 ist, hergestellt worden ist.

8. Ein Polymer wie in Anspruch 7 beansprucht, wobei die ungesättigte Carbonsäureverbindung wie in Anspruch 6 definiert ist und die ungesättigte Sulfonsäureverbindung wie in Anspruch 1 definiert ist.

9. Ein Polymer wie in Anspruch 7 beansprucht, hergestellt aus 50 bis 70 Gew.-% Acrylsäure oder einem Salz davon; 10 bis 40 Gew.-% 2-Acrylamido-2-methylpropylsulfonsäure und 10 bis 30 Gew.-% eines Allylmethoxypolyethylenglykols, das 5 bis 10 Ethylenoxyreste im Molekül enthält.

10. Ein Polymer wie in einem der Ansprüche 7 bis 9 beansprucht, wobei die genannte grundmolare Viskositätszahl 0,05 bis 0,5 dl/g ist.

## Revendications

1. Procédé d'inhibition de la corrosion et de la formation ainsi que du dépôt de tartre et d'oxyde de fer dans des systèmes aqueux, selon lequel on ajoute au système au moins 0,1 ppm d'un polymère soluble dans l'eau ayant une viscosité intrinsèque mesurée dans du chlorure de sodium 0,1 M à l'aide d'un viscosimètre à capillaire du type Cannon Ubbelohde 75, de 0,05 à 2,5 dl/g, caractérisé en ce que le polymère est préparé à partir :
   (a) de 35 à 90% en poids d'un acide carboxylique insaturé ou d'un sel de celui-ci,
   (b) de 5 à 40% en poids d'un acide 2-acrylamido-2-méthylpropylsulfonique, d'un acide 2-méthacrylamido-2-méthylpropylsulfonique ou d'un sel de ceux-ci, et
   (c) de 5 à 40% en poids d'un composé oxyde polyalkylène insaturé.

2. Procédé selon la revendication 1, dans lequel le polymère est préparé à partir :
   (a) de 50 à 70% en poids de l'acide carboxylique insaturé ou d'un sel de celui-ci,
   (b) de 10 à 40% en poids de l'acide 2-(méth)acrylamido-2-méthylpropylsulfonique ou d'un sel de celui-ci, et
   (c) de 10 à 30% en poids d'un composé oxyde polyalkylène insaturé.

3. Procédé selon la revendication 1 ou 2, dans lequel ladite viscosité intrinsèque est de 0,05 à 0,5 dl/g.

4. Procédé selon l'une quelconque des revendications précédentes, dans lequel on ajoute de 0,1 à 100 ppm de polymère.

5. Procédé selon la revendication 1, dans lequel :
   (a) le composé carboxylique est l'acide acrylique, l'acide méthacrylique, un acide alpha-halogénoacrylique, l'acide itaconique, l'acide vinylacétique, un acide alkylacétique, l'acrylate de bêta-carboxyéthyle, l'acide fumarique, l'acide maléique ou un sel d'un tel acide ; et
   (b) le composé oxyde polyalkylène est un allylpolyalkyl-glycol, un méthallylpolyalkyl-glycol, un acrylate de polyalkylène-glycol, un méthacrylate de polyalkylèneglycol ou un méthoxy-allyl-polyoxyalkylène ou un éther d'un tel composé.

6. Procédé selon la revendication 5, dans lequel le composé carboxylique est l'acide acrylique ou l' acide méthacrylique ou un de leurs sels et le composé oxyde de polyéthylène est l'allyl-polyéthylène-glycol ou le méthallyl-polyéthylène-glycol.

7. Polymère soluble dans l'eau ayant une viscosité intrinsèque, mesurée dans du chlorure de sodium 1,0 M à l'aide d'un viscosimètre à capillaire du type Cannon Ubbelohde 75, de 0,05 à 2,5 dl/g, caractérisé en ce qu'il est préparé à partir :
   (a) de 35 à 90% en poids d'un composé carboxylique insaturé qui est l'acide acrylique, l'acide méthacrylique, l'acide maléique, l'acide itaconique, un sel d'un tel acide ou un mélange d'au moins deux de ces composés,
   (b) de 5 à 40% en poids d'un composé sulfonique insaturé qui est l'acide 2-acrylamido-2-méthylpropylsulfonique, l'acide 2-méthacrylamido-2-méthylpropylsulfonique, un sel d'un tel acide ou un mélange d'au moins deux de ces composés ; et
   (c) de 5 à 40% en poids d'un composé d'oxyde polyalkylène insaturé de formule :
   $$CH_2{=}CH(OCH_2CH_2)_nOH \text{ ou } (CH_2{=}CH(OCH_2CH_2)_nOCH_3,$$
   dans laquelle n est un nombre entier de 5 à 10.

8. Polymère selon la revendication 7, dans lequel le composé carboxylique insaturé est tel que défini dans la revendication 6 et le composé sulfonique insaturé est tel que défini dans la revendication 1.

9. Polymère selon la revendication 7, préparé à partir de 50 à 70% en poids d'acide acrylique ou d'un sel de celui-ci ; de 10 à 40% en poids d'acide 2-acrylamido-2-méthylpropylsulfonique et de 10 à 30% en poids d'un allylméthoxypolyéthylène-glycol contenant de 5 à 10 restes oxyéthylène par molécule.

10. Polymère selon l'une quelconque des revendications 7 à 9, dans lequel ladite viscosité intrinsèque est de 0,05 à 0,5 dl/g.